# EUROPÄISCHE PATENTSCHRIFT

(11) **EP 0 468 151 B1**
(45) Veröffentlichungstag und Bekanntmachung des Hinweises auf die Patenterteilung: **30.03.1994**
(21) Anmeldenummer: 91107363.3
(22) Anmeldetag: 07.05.1991
(51) Int. Cl.: B60J 3/00

(54) **Sonnenblende für Fahrzeuge**
Sun visor for vehicles
Pare-soleil pour véhicules

(30) Priorität: 21.07.1990 DE 4023243
(43) Veröffentlichungstag der Anmeldung: 29.01.1992
(73) Patentinhaber: Gebr. Happich GmbH, D-42097 Wuppertal (DE)
(72) Erfinder: Viertel, Lothar, W-6636 Altforweiler (DE); Welter, Patrick, F-57730 La Chambre (FR)

(56) Entgegenhaltungen:
- EP-A- 0 261 989
- EP-A- 0 314 652
- DE-A- 3 011 158
- DE-A- 3 427 952
- US-A- 4 764 852

## Beschreibung

Die Erfindung bezieht sich auf eine Sonnenblende der im Oberbegriff der Ansprüche 1 und 8 angegebenen Art.

Bei einer bekannten Sonnenblende der im Oberbegriff des Anspruchs 1 angegebenen Art (vgl. z.B. DE-A-30 11 158) besteht der Boden der Vertiefung nur aus einer dünnen Schicht Schaummaterial, mit der die Wanne mittels Heißkleber verklebt ist. Da die heutigen Sonnenblenden immer dünner und dennoch mit Spiegelkassetten und insbesondere auch Beleuchtungseinrichtungen ausgerüstet sein sollen, nimmt auch die Schichtdicke des Bodens der Vertiefung mehr und mehr ab. Es ist daher keine unter allen Umständen sichere Befestigung der Wanne mehr gegeben, zumal sich der Heißkleber vom Schaummaterial lösen kann. Auch kann sich der Heißkleber, wenn er punktweise aufgetragen wird, durch das Schaummaterial durchdrücken und nach dem Verfestigen harte Stellen bilden, die ggf. auch auftragen, so daß sie fühlbar und/oder sichtbar sind. Hinzu kommt, daß das Auftragen des Heißklebers und Einsetzen der Wanne zeitaufwendig ist, da das Erkalten und Verfestigen des Heißklebers abgewartet werden muß, bevor weitere Montagearbeiten durchgeführt werden können.

Bei einer anderen bekannten Sonnenblende ist eine Grundplatte im Sonnenblendenkörper eingelagert, die Dome zur Befestigung der Wanne und einer Beleuchtungseinrichtung aufweist. Durch die Grundplatte geht aber Platz verloren und die Montage ist wegen der erforderlichen Schraubarbeiten recht aufwendig und teuer.

Der Erfindung liegt nun die Aufgabe zugrunde, die eingangs erwähnte Sonnenblende hinsichtlich der Befestigung der am Sonnenblendenkörper anzuordnenden Teile zu vereinfachen und zu verbessern.

Gemäß Patentanspruch 1 ist zur Lösung dieser Aufgabe vorgesehen, daß zur Befestigung der Wanne in die Vertiefung ein mit der Wanne verklipsbarer Rahmen mit im Schaummaterial verankerbaren Krallen eingesetzt ist.

Durch diese erfindungsgemäßen Maßnahmen entfällt die bisherige Notwendigkeit, Heißkleber oder Befestigungsschrauben einsetzen zu müssen. Es ist lediglich erforderlich, den Rahmen in die Vertiefung und hiernach die Wanne, durch den Rahmen hindurch in die Vertiefung einzubringen und dabei Vorsorge dafür zu tragen, daß es zur Verankerung der Krallen im Schaummaterial kommt. Das Anbringen der Wanne erfolgt also durch eine äußerst schnell und einfach zu bewerkstelligende Steckmontage, an die unmittelbar anschließend weitere Montagearbeiten, wie das Anbringen einer Spiegelkassette, durchgeführt werden können.

Die im Anspruch 2 gekennzeichneten Maßnahmen lassen ein problemloses Einsetzen des Rahmens zu und ermöglichen eine sichere Festlegung des Rahmens und damit der Wanne sowie der mit dieser zu verbindenden Teile am Sonnenblendenkörper, und zwar außerhalb der relativ dünnen Schicht des Schaummaterials am Boden der Vertiefung.

Durch die Maßnahmen nach Anspruch 3 wird eine automatische Verankerung der Krallen und eine unbedingt zuverlässige Festlegung derselben in der Verankerungslage durch bloßes Einstecken der Wanne in die Vertiefung erreicht.

Eine besonders einfache und kostengünstige Herstellung des Rahmens ergibt sich durch die Maßnahme nach Anspruch 4.

Durch die Ausgestaltung der Erfindung nach Anspruch 5 ergibt sich der Vorteil, den an die Fensteröffnung der Umhüllung angrenzenden Randbereich des Umhüllungsmaterials durch Einklemmen zwischen dem Schaummaterial und dem Rahmen sicher zu halten. Es ist kein Verkleben und kein vorheriges Einziehen des Randbereichs erforderlich, weil ein Verkleben durch die Klemmverbindung überflüssig geworden ist und weil das Einziehen des Randbereichs in die Vertiefung durch das Einstecken des Rahmens in die Vertiefung automatisch mit erfolgt. Es besteht aber auch die Möglichkeit, den die Fensteröffnung der Umhüllung umgebenden Randbereich zwischen Rahmen und Wanne einzuklemmen, um auf diese Weise den Rahmen den Blicken eines Betrachters zu entziehen. In diesem Fall muß allerdings der Rahmen in die Vertiefung eingesteckt werden, bevor der Sonnenblendehkörper mit einer Umhüllung versehen wird.

Um die Klipsverbindung zwischen Rahmen und Wanne mit einfachsten Mitteln verwirklichen zu können, ist die Maßnahme nach Anspruch 6 vorgesehen.

Die Maßnahmen des Anspruchs 7 dienen dazu, auch eine einfache Steckmontage für die Spiegelkassette und ein gefälliges Aussehen der Sonnenblende zu erzielen.

Im Oberbegriff des Anspruchs 8 wird von einer Sonnenblende mit Spiegel und Beleuchtungseinrichtung ausgegangen, wie sie durch die DE-A-34 27 952 bekanntgeworden ist. Um auch eine solche Sonnenblende hinsichtlich der Befestigung der am Sonnenblendenkörper anzuordnenden Teile zu vereinfachen und zu verbessern und um alle zur Befestigung des Spiegels und der Beleuchtungseinrichtung gehörenden Teile durch bloßes Zusammenstecken montieren zu können, sind die im Kennzeichen des Anspruchs 8 angegebenen Maßnahmen vorgesehen.

Die Erfindung wird nachstehend anhand eines in der Zeichnung dargestellten Ausführungsbeispiels des Näheren erläutert, und es zeigen:

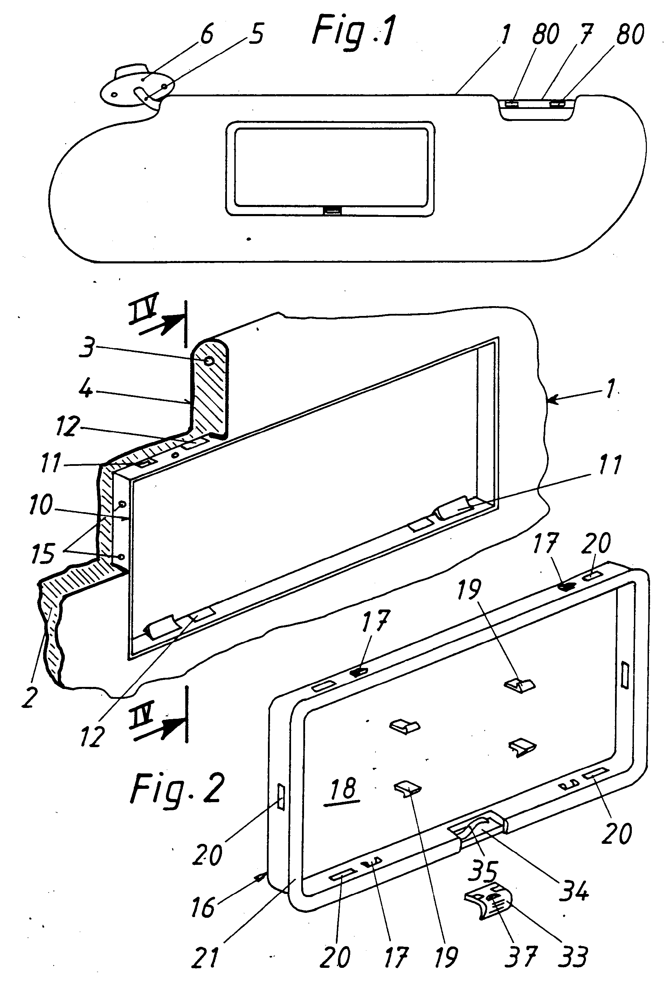

- Fig. 1: eine Ansicht der Sonnenblende mit Spiegelkassette und zugeklappten Deckel,
- Fig. 2: eine auseinandergezogene perspektivische Teildarstellung der Sonnenblende nach Fig. 1,
- Fig. 3: eine weitere auseinandergezogene perspektivische Teildarstellung der Sonnenblende nach Fig. 1,
- Fig. 4: einen Schnitt, etwa folgend der Linie IV - IV nach Fig. 2,
- Fig. 5: den Schnitt nach Fig. 4 mit eingesetzter Wanne,
- Fig. 6: einen Schnitt, ähnlich dem nach Fig. 5 im Bereich einer Wannenbefestigungsposition und
- Fig. 7: eine Einzelheit der Sonnenblende.

Die Sonnenblende besteht aus einem Sonnenblendenkörper 1 mit einem Kern 2 aus Schaummaterial, einer im Kern 2 eingebetteten Verstärkungseinlage 3 und einer Hülle 4 aus PVC-Folie oder Stoff. Zur schwenk- und klappbaren Befestigung an einer Fahrzeugkarosserie dient eine im Sonnenblendenkörper 1 drehbar angeordnete Achse 5 und ein darauf schwenkbar angeordnetes Böckchen 6 mit Anschraublöchern. Am entgegengesetzten Ende der Sonnenblende ist eine Gegenlagerachse 7 angeordnet, die zum lösbaren und drehbaren Einhängen in ein nicht gezeigtes Gegenlagerböckchen an der Fahrzeugkarosserie dient. Der im Sonnenblendenkörper 1 drehbar gelagerte Schenkel der Achse 5 und die Gegenlagerachse 7 verlaufen fluchtend entlang eines Randbereichs des Sonnenblendenkörpers 1 und bilden die Achse beim Herunterklappen der Sonnenblende gegen eine Windschutzscheibe, um sie von der Nichtgebrauchslage im Bereich des Dachhimmels in die Gebrauchslage im Bereich der Windschutzscheibe zu bewegen. Der Sonnenblendenkörper 1 läßt sich auch gegen ein Seitenfenster verschwenken, indem die Gegenlagerachse 7 aus dem Gegenlagerböckchen ausgehängt und um den im Böckchen 6 gelagerten Schenkel der Achse 5 gegen das Seitenfenster geschwenkt wird.

Auf der Gegenlagerachse 7 sind elektrische Kontakte 80 angeordnet, die mit entsprechenden Kontakten im Gegenlagerböckchen zusammenwirken und zur Stromversorgung einer Beleuchtungseinrichtung dienen, von der in den Fig. 2 und 7 Einzelteile sichtbar sind.

Im Sonnenblendenkörper 1 ist eine stufenförmig abgesetzte Vertiefung 8 ausgebildet. Der untere, dem Boden 9 benachbarte Bereich der Vertiefung 8 besitzt einen geringeren Öffnungsquerschnitt als der obere. Der obere Bereich der Vertiefung nimmt einen Rahmen 10 auf, welcher als Kunststoff-Spritzgußteil ausgebildet ist, einen der Vertiefung 8 angepaßten, etwa rechteckigen Umriß, mehrere Krallen 11 und Öffnungen 12 aufweist. Die zweckmäßigerweise an zwei gegenüberliegenden Rahmenseiten vorgesehenen Krallen 11 sind jeweils über ein Filmscharnier einstückig und materialeinheitlich am Rahmen 10 angeformt. Die Krallen 11 bestehen jeweils aus einem am unteren Rahmenrand angeformten Schwenkarm mit einem am freien Ende sitzenden Widerhaken 13. Durch das Einsetzen des Rahmens 10 in die Vertiefung 8 werden gleichzeitig Randbereiche 14 der Hülle 4 in die Vertiefung 8 eingezogen und zwischen Kern 2 und Rahmen 10 eingeklemmt. Um die Festlegung der Randbereiche 14 zu erhöhen, sind am Rahmen 10 außenseitig Dorne 15 mit spitz auslaufenden Enden angeformt.

Die Öffnungen 12 im Rahmen 10 dienen zur Aufnahme von an der Wanne 16 ausgebildeten Klipsnasen 17. Die Wanne 16 ist als Kunststoff-Spritzgußteil mit den schräg nach außen abstehenden Klipsnasen 17, die federnd in die jeweilige Wandebene zurückweichen können, mit weiteren, auf dem Wannenboden 18 angeformten Klipsnasen 19, mit Öffnungen 20 und mit einem umlaufenden Flansch 21 ausgebildet. Bei der Montage der Wanne 16 wird diese lediglich durch den Rahmen 10 hindurch in die Vertiefung eingesteckt. Beim Eindrücken wird die Wanne 16 gegen die Krallen 11 bewegt die dadurch federelastisch zurückweichen und sich dabei mit ihren Widerhaken 13 im Schaummaterial verkrallen. Sobald der Wannenboden 18 am Boden 9 der Vertiefung 8 zur Anlage kommt, sind auch die Klipsnasen 17 in der Öffnung 12 eingerastet und die Krallen 11 gegen Zurückweichen blockiert. Die aus Rahmen 10 und Wanne 16 bestehende Einheit ist damit durch einfache Steckmontage unbedingt zuverlässig am Kern 2 des Sonnenblendenkörpers 1 festgelegt.

Die Öffnungen 20 in den Wannenwänden dienen zum Einrasten von Klipsnasen 22, die an der Spiegelkassette 23, die ebenfalls aus Kunststoff besteht, angeformt sind. Somit kann auch die Spiegelkassette 23 durch bloßes Einstecken an der Wanne 16 festgelegt werden. Zur Spiegelkassette 23 gehören ein Spiegel 24, zwei Leuchtfenster 25 und ein Klappdeckel 26. Der Klappdeckel 26 ist am oberen Kassettenrand angelenkt und durch Schenkelfedern 27 in Offenstellung belastet.

Zur Sonnenblende gehört auch eine Beleuchtungseinrichtung, die von der Fahrzeugelektrik gespeist wird und die aus einem Reflektor 28, einer Leiterplatte 29 mit Kontaktelementen, Soffitten 30 und den erwähnten Leuchtfenstern 25 besteht. Der Reflektor 28 ist auf die Klipsnasen 19 am Wannenboden 18 durch eine Steckmontage aufklipsbar. Auf den Reflektor 28 ist die Leiterplatte 29 aufklipsbar, wozu der Reflektor mit Klipsnasen 31 ausgestattet ist.

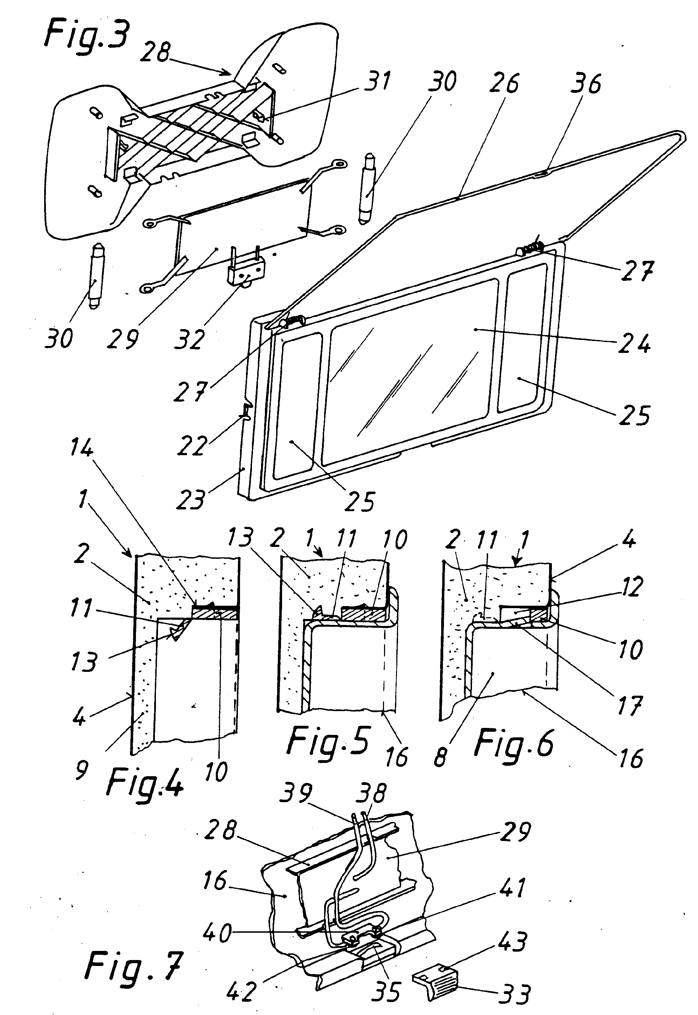

Zum Ein- und Ausschalten der Beleuchtungseinrichtung dient ein an der Leiterplatte 29 angebundener Mikroschalter 32 (Fig. 3) oder eine Schaltungsanordnung (Fig. 7). In jedem Fall ist ein Betätigungsschalter 33 vorgesehen, der schwenkbeweglich in einer Wandaussparung 34 der Wanne 16 sitzt und der durch eine Feder 35, die ebenfalls in der Wandaussparung 34 sitzt, belastet ist. Dem Betätigungsschalter 33 fallen zwei Funktionen zu, indem er zum einen dazu dient, den Deckel 26 zu verriegeln oder zu entriegeln und zum anderen dazu dient, das Ein- und Aussschalten der Beleuchtungseinrichtung zu steuern. Für die erste Funktion besitzt der Betätigungsschalter 33 eine, in eine Rastnut 36 am Deckel einrastbare Rastnase 37.

Bei geöffnetem Deckel 26 wird der in der Wandaussparung 34 sitzende Schenkel des Betätigungsschalters 33 durch die Feder 35 so belastet, daß er einen Schaltkontakt auf den Mikroschalter 32 oder einen Druck auf die Schaltungsanordnung nach Fig. 7 ausübt. Beim Entriegeln des Deckels 26, der dann durch die Schenkelfedern 27 nach oben bewegt wird, wird also gleichzeitig durch den Betätigungsschalter der Mikroschalter 32 betätigt oder der Stromkreis der Schaltungsanordnung nach Fig. 7 geschlossen. Fig. 7 zeigt einen Bereich der Wanne 16, einen Bereich des Reflektors 28 und einen Bereich der Leiterplatte 29. An letztere sind Kabel 38, 39 angeschlossen, die einmal unmittelbar und einmal mittelbar in einem Isolierkörper 40 mit Kontakten 41, 42 enden. Bei durch die Feder 35 hochgedrückter Stellung des Betätigungsschalters 33, sorgt eine darin eingelassene Kontaktbrücke 43 dafür, daß der Stromkreis für die Beleuchtungseinrichtung geschlossen wird. Die Kabel 38, 39 sind durch den Kern 2 hindurch bis zu den Kontakten 80 an der Gegenlagerachse 7 geführt.

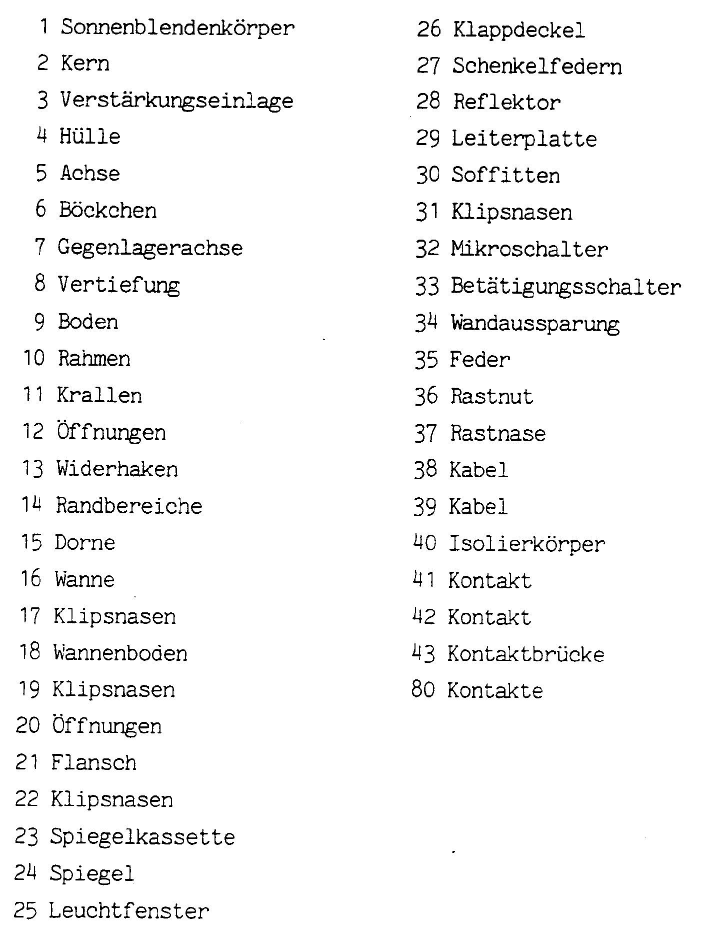

## Patentansprüche

1. Sonnenblende für Fahrzeuge, im wesentlichen bestehend aus einem plattenförmigen Sonnenblendenkörper (1) aus Schaummaterial, der in einer seiner Hauptflächen eine Vertiefung (8) für die Aufnahme einer, eine Spiegelkassette (23) tragenden Wanne (16) aufweist, dadurch gekennzeichnet, daß zur Befestigung der Wanne (16) in die Vertiefung (8) ein mit der Wanne (16) verklipsbarer Rahmen (10) mit im Schaummaterial verankerbaren Krallen (11) eingesetzt ist.

2. Sonnenblende nach Anspruch 1, dadurch gekennzeichnet, daß der Rahmen (10), der in einer stufenförmig abgesetzten Öffnungserweiterung der Vertiefung (8) angeordnet ist, an seinem auf dem Stufenabsatz anliegenden Ende mit den Krallen (11) bestückt ist, wobei die Krallen (11) jeweils aus einem am Rahmen angeordneten Schwenkarm mit zumindest einem am freien Ende sitzenden Widerhaken (13) bestehen und aus einer schräg zum Boden (9) der Vertiefung (8) ausgerichteten Ausgangslage in eine etwa parallel zu den Rahmenwänden ausgerichteten Verankerungslage, in der die Widerhaken (13) in die Seitenwandungen der Vertiefung (8) unterhalb der Öffnungserweiterung eingreifen, verschwenkbar sind.

3. Sonnenblende nach Anspruch 1 oder 2, dadurch gekennzeichnet, daß der Öffnungsquerschnitt des Rahmens (10) dem Umriß der in die Vertiefung (8) passenden Wanne (16) angepaßt ist und daß die Krallen (11) durch Einstecken der Wanne (16) in die mit dem Rahmen (10) bestückte Vertiefung (8) in ihre Verankerungslage verschwenkbar und in der Verankerungslage blockierbar sind.

4. Sonnenblende nach wenigstens einem der Ansprüche 1 bis 3, dadurch gekennzeichnet, daß der Rahmen (10) als Kunststoff-Spritzgußteil ausgebildet ist und daß die Krallen (11) jeweils über ein Filmscharnier einstückig und materialeinheitlich am Rahmen (10) angeformt sind.

5. Sonnenblende nach wenigstens einem der Ansprüche 1 bis 4, dadurch gekennzeichnet, daß der Rahmen (10) zur Halterung der Wanne (16) und zur bereichsweisen Festlegung eines den Sonnenblendenkörper (1) umhüllenden Überzugs (4), der im Bereich der Vertiefung (8) eine fensterartige Ausstanzung aufweist und mit an die Ausstanzung angrenzenden Randbereichen (14) in die Vertiefung (8) eingezogen ist, dient, wobei der Rahmen (10) an seinen mit dem Überzug (4) in Berührungsanlage kommenden Außenseiten mit angespritzten Dornen (15) ausgebildet ist.

6. Sonnenblende nach wenigstens einem der Ansprüche 1 bis 5, dadurch gekennzeichnet, daß der Rahmen (10) Öffnungen (12) zur Aufnahme von an der Wanne (16) ausgebildeten Klipsnasen (17) aufweist.

7. Sonnenblende nach wenigstens einem der Ansprüche 1 bis 6, dadurch gekennzeichnet, daß die Wanne (16) ebenfalls als Kunststoff-Spritzgußteil ausgebildet ist, in die Öffnungen (12) des Rahmens (10) einrastbare Klipsnasen (17), Öffnungen (20) zum Einrasten von an der Spiegelkassette (23) ausgebildeten Klipsnasen (22) und am offenen Ende einen umlaufenden, den Rahmen (10) überdeckenden Flansch (21) aufweist.

8. Sonnenblende für Fahrzeuge, im wesentlichen bestehend aus einem plattenförmigen Sonnenblendenkörper (1) aus Schaummaterial, der in einer seiner Hauptflächen eine Vertiefung (8) für die Aufnahme einer, eine Spiegelkassette (23) mit einer elektrischen Beleuchtungseinrichtung tragenden Wanne (16) aufweist, wobei die Wanne (16) Öffnungen (20) zum Einrasten von an der Spiegelkassette (23) ausgebildeten Klipsnasen (22) aufweist und die Spiegelkassette (23) mit einem Spiegel (24), über den Lichtquellen (30) angeordneten Leuchtfenstern (25), einem in Richtung Offenstellung federbelasteten Deckel (26), der den Spiegel (24) und die Leuchtfenster (25) abzudecken oder freizugeben vermag, einem Betätigungsschalter (33), welcher gegen die Kraft eines Federmittels (35) betätigbar ist, um den Deckel (26) zu entriegeln bzw. zu verriegeln und einem Betätigungsschalter ausgerüstet ist, um die Beleuchtungseinrichtung an- bzw. auszuschalten, dadurch gekennzeichnet, daß zur Befestigung der Wanne (16) in die Vertiefung (8) ein mit der Wanne (16) verklipsbarer Rahmen (10) mit im Schaummaterial verankerbaren Krallen (11) eingesetzt ist, daß die Wanne (16) erste, in Öffnungen (12) des Rahmens (10) einrastbare Klipsnasen (17) und zweite am Wannenboden (18) angeordnete Klipsnasen (19) zur Halterung eines Reflektors (28) aufweist, daß der Reflektor (28) mit Klipsnasen (31) für die Halterung einer mit Lichtquellen (30) bestückten Leiterplatte (29) ausgebildet ist, wobei ein und derselbe Betätigungsschalter (33) betätigbar ist, um zum einen den Deckel (26) zu entriegeln bzw. zu verriegeln und zum anderen dabei gleichzeitig die Beleuchtungseinrichtung an- bzw. auszuschalten.

## Claims

1. A sun visor for vehicles, substantially comprising a plate-shaped sun visor body (1) of foam material, which in one of its main faces has a depression (8) to receive a trough (16) carrying a mirror cassette (23), characterised in that for the attachment of the trough (16) into the depression (8), a frame with claws (11) which are able to be anchored in the foam material is inserted, which frame is able to be clipped to the trough (16).

2. A sun visor according to Claim 1, characterised in that the frame (10), which is arranged in a gradually recessed widened opening of the depression (8), is equipped at its end resting on the graduated recess with the claws (11), in which the claws (11) in each case comprise a swivel arm arranged on the frame, with at least one barb (13) sitting on the free end, and are orientable from a starting position, aligned obliquely to the base (9) of the depression (8), into an anchoring position aligned approximately parallel to the frame walls, in which the barbs (13) engage into the side walls of the depression (8) beneath the widened opening.

3. A sun visor according to Claim 1 or 2, characterised in that the opening cross-section of the frame (10) is matched to the outline of the trough (16) fitting into the depression (8), and that the claws (11) are able to be oriented into their anchoring position by inserting the trough (16) into the depression (8) equipped with the frame (10), and are able to be locked in the anchoring position.

4. A sun visor according to any one of Claims 1 to 3, characterised in that the frame (10) is constructed as a plastics material sprayed die casting and that the claws (11) in each case are formed by means of a film hinge in one piece and uniform with respect to material on the frame (10).

5. A sun visor according to any one of Claims 1 to 4, characterised in that the frame (10) serves for mounting the trough (16) and for the fixing, in regions, of a covering (4) surrounding the sun visor body (1), which covering has a window-like cut-out in the region of the depression (8) and is drawn into the depression (8) with peripheral regions (14) adjoining the cut-out, in which the frame (10) is constructed on its outer sides, coming into contact with the covering (4) with sprayed-on pins (15).

6. A sun visor according to any one of Claims 1 to 5, characterised in that the frame (10) has openings (12) to receive clip projections (17) constructed on the trough (16).

7. A sun visor according to any one of Claims 1 to 6, characterised in that the trough (16) is likewise constructed as a plastics material sprayed die casting, and has clip projections (17) able to be engaged into the openings (12) of the frame (10), openings (20) for the engagement of clip projections (22) constructed on the mirror cassette (23) and, at the open end, an encircling flange (21) covering the frame (10).

8. A sun visor for vehicles, substantially comprising a plate-shaped sun visor body (1) of foam material, which in one of its main surfaces has a depression (8) to receive a trough (16) carrying a mirror cassette (23) with an electric lighting arrangement, in which the trough (16) has openings (20) for the engagement of clip projections (22) constructed on the mirror cassette (23), and the mirror cassette (23) is equipped with a mirror (24), with light windows (25) arranged over the light sources (30), with a cover (26) spring-loaded in the direction of the open position, which is able to cover or free the mirror (24) and the light windows (25), with an actuating switch (33), which is able to be actuated against the force of a spring means (35), in order to unlock or lock the cover (26), and with an actuating switch, in order to switch the lighting arrangement on or off, characterised in that for the attachment of the trough (16) into the depression (8), a frame (10) with claws (11) which are able to be anchored in the foam material is used, which frame is able to be clipped to the trough (16), that the trough (16) has first clip projections (17) which are able to be engaged in openings (12) of the frame (10), and second clip projections (19) arranged on the trough base (18) for the mounting of a reflector (28), that the reflector (28) is constructed with clip projections (31) for the mounting of a printed circuit board (29) equipped with light sources (30), in which one and the same actuating switch (33) is able to be actuated, in order on the one hand to unlock or lock the cover (26) and on the other hand, at the same time, to switch the lighting arrangement on or off.

## Revendications

1. Pare-soleil pour véhicule, essentiellement constitué d'un corps (1) en mousse, en forme de plaque, qui comporte dans l'une de ses surfaces principales, un creux (8) destiné à loger un bac (16) portant une cassette de miroir (23), caractérisé en ce que pour fixer le bac (16) dans le creux (8), un cadre (10), à clipser avec le bac (16), est inséré avec des griffes (11) s'ancrant dans la mousse.

2. Pare-soleil selon la revendication 1, caractérisé en ce que le cadre (10), qui est prévu dans une ouverture élargie, étagée en forme de gradin, du creux (8), est pourvu à son extrémité s'appliquant contre le gradin, de griffes (11), celles-ci étant constituées chacune d'un bras pivotant prévu sur le cadre, avec au moins une barbe (13) située à l'extrémité libre et pouvant pivoter à partir d'une position initiale, orientée obliquement par rapport au fond (9) du creux (8), dans une position d'ancrage, à peu près parallèle aux parois du cadre, dans laquelle les barbes (13) s'engagent dans les parois latérales du creux (8), sous l'ouverture élargie.

3. Pare-soleil selon les revendications 1 ou 2, caractérisé en ce que la section transversale de couverture du cadre (10) est adaptée au contour du bac (16) s'ajustant dans le creux (8) et en ce que les griffes (11) peuvent pivoter dans leur position d'ancrage et être bloquées dans celle-ci, par emboîtement du bac (16) dans le creux (8) équipé du cadre (10).

4. Pare-soleil selon l'une au moins des revendications 1 à 3, caractérisé en ce que le cadre (10) est un élément en matière plastique moulé par injection et en ce que les griffes (11) sont venues de moulage d'une seule pièce et dans la même matière que le cadre (10), par une pellicule formant charnière.

5. Pare-soleil selon l'une au moins des revendications 1 à 4, caractérisé en ce que le cadre (10) sert à maintenir le bac (16) et à fixer par endroits un revêtement (4), entourant le corps (1) du pare-soleil, qui présente dans la zone du creux (8) une découpe en forme de fenêtre et qui, avec les zones de bordure (14) adjacentes à la découpe, est tiré à l'intérieur du creux (8), le cadre (10) présentant des broches (15) venues de moulage sur ses côtés extérieurs, venant en contact avec le revêtement (4).

6. Pare-soleil selon l'une au moins des revendications 1 à 5, caractérisé en ce que le cadre (10) présente des ouvertures (12) destinées à loger des ergots de clipsage (17), formés sur le bac (16).

7. Pare-soleil selon l'une au moins des revendications 1 à 6, caractérisé en ce que le bac (16) est également un élément en matière plastique moulé par injection, en ce qu'il comporte des ergots de clipsage (17) venant s'encliqueter dans les ouvertures (12) du cadre (10), des ouvertures (20) pour l'encliquetage d'ergots de clipsage (22) formés sur la cassette de miroir (23) ainsi qu'à l'extrémité libre, une bride (21) continue, recouvrant le cadre (10).

8. Pare-soleil pour véhicule, essentiellement constitué d'un corps (1) en mousse, en forme de plaque, qui comporte dans l'une de ses surfaces principales, un creux (8) destiné à loger un bac (16) portant une cassette de miroir (23) avec un dispositif d'éclairage électrique, dans lequel le bac (16) présente des ouvertures (20) pour l'encliquetage d'ergots de clipsage (22), formés sur la cassette de miroir (23) et la cassette de miroir (23) est équipée d'un miroir (24), de fenêtres d'éclairage (25) placées sur les sources lumineuses (30), d'un couvercle (26) soumis à l'action d'un ressort dans le sens de la position ouverte, qui peut recouvrir ou dégager le miroir (24) et les fenêtres d'éclairage (25), un interrupteur d'actionnement (33) qui peut être actionné à l'encontre de la force d'un moyen à ressort (35) afin de déverrouiller ou de verrouiller le couvercle (26) et d'un interrupteur d'actionnement, afin d'allumer ou d'éteindre le dispositif d'éclairage, caractérisé en ce que pour la fixation du bac (16) dans le creux (8), il est inséré un cadre (10), à clipser avec le bac (16), avec des griffes (11) à ancrer dans la mousse, en ce que le bac (16) comporte des premiers ergots de clipsage (17) s'encliquetant dans des ouvertures (12) du cadre (10) et des seconds ergots de clipsage (19), placés sur le fond (18) du bac, en vue de la fixation d'un réflecteur (28), en ce que le réflecteur (28) présente des ergots de clipsage (31) pour la fixation d'une plaque de circuits imprimés (29) équipée de sources lumineuses (30), un seul et même interrupteur d'actionnement (33) pouvant être actionné pour déverrouiller ou verrouiller le couvercle (26) et pour d'autre part allumer ou éteindre en même temps le dispositif d'éclairage.
